Europäisches Patentamt

European Patent Office

Office européen des brevets

(19)

(11) Veröffentlichungsnummer: **0 362 121**
**A2**

(12) **EUROPÄISCHE PATENTANMELDUNG**

(21) Anmeldenummer: **89710071.5**

(22) Anmeldetag: **21.09.89**

(51) Int. Cl.5: **C09K 7/02**

(30) Priorität: **29.09.88 DE 3833045**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **Henkel Kommanditgesellschaft auf Aktien**
**Henkelstrasse 67**
**D-4000 Düsseldorf 13(DE)**

Anmelder: **PHRIKOLAT CHEMISCHE ERZEUGNISSE GMBH**
**Dammstrasse 70 - 80**
**D-5200 Siegburg(DE)**

(72) Erfinder: **Opitz, Willy, Dr.**
**Auf dem Berg 4**
**D-5200 Siegburg Fei.(DE)**
Erfinder: **Müller, Heinz**
**Goldregenweg 4**
**D-4019 Monheim(DE)**
Erfinder: **Herold, Claus-Peter, Dr.**
**Ostpreussenstrasse 266**
**D-4020 Mettmann(DE)**
Erfinder: **von Tapavicza, Stephan, Dr.**
**Thomas-Mann-Strasse 12**
**D-4006 Erkrath 2(DE)**

(54) **Bohrspüladditive auf Basis eines Polymergemisches, deren Verwendung sowie Verfahren zur Herstellung derselben.**

(57) Offenbart werden Bohrspüladditive auf Basis eines Polymergemisches aus 20 bis 80 Gew.-% Carboxymethylcellulose und 80 bis 20 Gew.-% einer Polycarbonsäure, ausgewählt aus Polyacrylat, Polymethacrylat und/oder deren Copolymerisaten und/oder deren Salzen, dadurch gekennzeichnet, daß die Carboxymethylcellulose, die nach dem Slurry-Verfahren aus Rohlinters und/oder Holzcellulose erhalten worden ist, im nassen alkoholfeuchten Zustand mit der Polycarbonsäure vermischt und getrocknet wird, wobei technische oder gereinigte Carboxymethylcellulose verwendet wird, deren Verwendung in Bohrspülungen oder Workover- und Packer-Flüssigkeiten, sowie ein Verfahren zur Herstellung derselben.

# EP 0 362 121 A2

## Bohrspüladditive auf Basis eines Polymergemisches, deren Verwendung sowie Verfahren zur Herstellung derselben.

Die vorliegende Erfindung betrifft Bohrspüladditive auf Basis eines Polymergemisches, bestehend aus Carboxymethylcellulose und einer Polycarbonsäure, ausgewählt aus Polyacrylat, Polymethacrylat und/oder deren Copolymerisaten und/oder deren Salzen, Verwendung dieser Borspüladditive sowie ein Verfahren zu deren Herstellung.

Um beim Bohren nach Erdöl oder Erdgas optimale Ergebnisse zu erhalten, muß die Bohrspülung den jeweilig durchbohrten Gesteinsschichten angepaßt werden. Die Einstellung der Rheologie und die Absenkung der Preßwasserverluste geschieht bei wasserbasischen Bohrspülungen durch Verwendung von Bentonit oder anderen Tonen, wie z. B. Attapulgit, und wasserlöslichen Polymeren, wie z. B. Stärke, Carboxymethylcellulose (CMC), Hydroxyethylcellulose (HEC), Carboxymethylhydroxyethylcellulose (CMHEC), als Schutzkolloide.

Da heute immer tiefere Lagerstätten und schwierigere Formationen erschlossen werden müssen, werden an die Bohrspülung auch immer höhere Anforderungen, besonders in bezug auf Temperaturstabilität und Elektrolytverträglichkeit, gestellt. Diese erhöhten Anforderungen können die genannten wasserlöslichen Polymere wie Stärke, CMC, HEC oder CMHEC nicht mehr erfüllen, da diese im allgemeinen oberhalb von 120 - 150 °C thermisch so schnell abgebaut werden, daß ein wirtschaftlicher Einsatz nicht mehr lohnend ist.

Aus dem Stand der Technik ist es ferner bekannt, Gemische aus wasserlöslichen Polymeren auf Basis von Polysacchariden, beispielsweise CMC, HEC, CMHEC oder Stärke, und synthetischen Polycarbonsäuren in Bohrspülungen einzusetzen. Durch solche Kombinationen können zwar die rheologischen und andere Eigenschaften der Bohrspülungen besser den Praxisanforderungen angepaßt werden, jedoch gelingt es nicht, hiermit die Temperaturstabilität positiv zu beeinflussen.

Die nachstehend zitierten Veröffentlichungen geben eine Übersicht über den relevanten Stand der Technik.

Die DE-OS 26 22 409 beschreibt Bohrflüssigkeiten, bestehend aus wasserlöslichen Alkenylsäurepolymeren, beispielsweise Ethylacrylat/Methylacrylatsäurecopolymerisat, und wasserlöslichen Polysacchariddderivaten, beispielsweise einer Hydroxyethylcellulose.

Die US-PS 4,425,241 beschreibt eine Bohrflüssigkeit mit verbesserten Flüssigkeitsverlust-Eigenschaften, enthaltend

(a) eine wäßrige Mineralsalzlösung,
(b) Tonmaterialien zur Bildung eines Filterkuchens an der Wand des Bohrlochs,
(c) ein Polyethylenglykol und
(d) mindestens ein wasserdispergierbares Verdickungsmittel, beispielsweise Carboxyalkylhydroxyalkylcellulose.

Chemical Abstracts, Band 100 (1984), Abstract Nr. 212787v beschreibt Bohrflüssigkeiten, enthaltend ein Bentonit, gegebenenfalls ein Verdickungsmittel wie Carboxymethylcellulose und ein Polyacrylat mit einem Calciumkomplexierungsvermögen von mehr als 300 mg/g, wie Natriumpolyacrylat.

Chemical Abstracts, Band 100 (1984), Abstract Nr. 212788w beschreibt Bohrflüssigkeiten, enthaltend ein Bentonit, gegebenenfalls ein Verdickungsmittel wie Carboxymethylcellulose und ein Polyacrylat mit einem Calcium-Komplexierungsvermögen von mehr als 300 mg/g zur Verhinderung von Gelbildung in Gegenwart von Salzen und Zement.

Neu entwickelte synthetische Polymere, wie sie z. B. in den Patentanmeldungen DE-OS 31 44 770, DE-OS 34 04 491, EP-OS 0 122 073 und EP-OS 0 131 124 beschrieben sind, können bis ca. 200 °C eingesetzt werden, sind aber wegen der hohen Kosten für die verwendeten speziellen Monomeren sehr viel teurer als die herkömmlichen Polymeren auf Polysaccharidbasis. Die Wirtschaftlichkeit des Bohrprozesses wird daher bei Einsatz dieser Polymeren deutlich verringert.

Der Erfindung liegt die Aufgabe zugrunde, ein neuartiges Bohrspüladditiv auf Basis eines Polymergemisches bereitzustellen, das im Vergleich zu den bekannten Bohrspüladditiven aus dem Stand der Technik auf Basis von Polysacchariden eine höhere Temperatur- und Elektrolytstabilität aufweist und zudem kostengünstiger ist als die oben beschriebenen synthetischen Bohrspüladditive.

Diese Aufgabe wird durch eine unter bestimmten Bedingungen hergestellte Kombination des Celluloseethers Carboxymethylcellulose und bestimmter Polycarbonsäuren gelöst.

Die Erfindung betrifft dementsprechend Bohrspüladditive auf Basis eines Polymergemisches aus 20 bis 80 Gew.-% Carboxymethylcellulose und 80 bis 20 Gew.-% einer Polycarbonsäure, ausgewählt aus Polyacrylat, Polymethacrylat und/oder deren Copolymerisaten, und/oder deren Salzen, die dadurch gekenn-

2

zeichnet sind, daß die Carboxymethylcellulose, die nach dem Slurry-Verfahren aus Rohlinters und/oder Holzcellulose erhalten worden ist, im nassen alkoholfeuchten Zustand mit der Polycarbonsäure vermischt und getrocknet wird, wobei technische oder gereinigte Carboxymethylcellulose verwendet wird.

Diese Additive weisen gegenüber den aus dem Stand der Technik bekannten Additiven eine sehr gute Temperaturstabilität und eine hohe Elektrolytverträglichkeit auf und sind darüberhinaus kostengünstiger herzustellen als synthetische Polymere.

Vorzugsweise bestehen die erfindungsgemäßen Bohrspüladditive aus 30 bis 70 Gew.-%, insbesondere 40 bis 60 Gew.-%, Carboxymethylcellulose und 70 bis 30 Gew.-%, insbesondere 60 bis 40 Gew.-%, Polycarbonsäuren.

Die für die erfindungsgemäßen Bohrspüladditive eingesetzte Carboxymethylcellulose wird vorzugsweise aus Baumwollinters im Slurryverfahren unter Verwendung äquivalenter Mengen an Natriumhydroxid und Monochloressigsäure hergestellt. Die Veretherung verläuft hierbei in Gegenwart eines mit Wasser mischbaren, indifferenten Lösungsmittels, beispielsweise eines Alkohols wie Ethanol, als Suspendiermittel. Dieses sogenannte Slurry-Verfahren ist dem Fachmann bekannt und wird z.B. in "Ullmann's Encyklopädie der technischen Chemie", 4. Auflage (1975), Band 9, Seiten 203 bis 204, beschrieben. Die so hergestellte Carboxymethylcellulose kann sowohl als technisches, ungereinigtes Produkt als auch in gereinigter Form eingesetzt werden. Der durchschnittliche Substitutionsgrad (DS) liegt vorzugsweise zwischen 0,9 und 1,5, insbesondere zwischen 1,0 und 1,23 liegen. Die Viskosität, gemessen nach Brookfield RVT in 5 %-iger Konzentration, liegt vorzugsweise zwischen 5.000 und 25.000 mPa.s, insbesondere aber zwischen 10.000 und 20.000 mPa.s.

Polycarbonsäuren und deren Salze sind in großer Vielfalt beschrieben. Für die erfindungsgemäßen Bohrspüladditive eignen sich Polyacrylate, Polymethacrylate und/oder Polyacrylat bzw. Polymethacrylat-Copolymere und/oder deren Salze mit Molekulargewichten nicht über 3.000, vorzugsweise von 1.000 bis 3.000.

Bei der Herstellung der erfindungsgemäßen Bohrspüladditive wird die alkoholfeuchte CMC mit einem Ethanolgehalt von vorzugsweise ca. 75 Gew.-% mit wäßriger Polycarbonsäure in einem Extruder oder ähnlichem Gerät zusammengeknetet und dabei getrocknet. Die beiden Komponenten werden dabei vorzugsweise im Verhältnis von 30 : 70 bis 70 : 30, insbesondere im Verhältnis 40 : 60 bis 60 : 40, eingesetzt.

Ein weiterer Gegenstand der vorliegenden Erfindung betrifft dementsprechend die Herstellung der Bohrspüladditive, wobei man 20 bis 80 Gew.-% aus Rohlinters und/oder Holzcellulose nach dem Slurry-Verfahren gewonnene Carboxymethylcellulose im nassen alkoholfeuchten Zustand mit 80 bis 20 Gew.-% einer Polycarbonsäure, ausgewählt aus Polyacrylat, Polymethacrylat und/oder deren Copolymerisaten, und/oder deren Salzen, vermischt und trocknet, wobei technische und/oder gereinigte Carboxymethylcellulose verwendet wird. Die vorstehend angegebenen bevorzugten Bereiche, die sich auf die Carboxymethylcellulose beziehungsweise die Polycarbonsäuren beziehen, gelten sinngemäß in gleicher Weise für das erfindungsgemäße Verfahren zur Herstellung der Bohrspüladditive.

Die im Sinne der Erfindung hergestellten Bohrspüladditive zeigen deutlich bessere Eigenschaften als solche, die durch trockenes Vermischen der Komponenten hergestellt wurden.

Ein typisches Verfahren zur Herstellung eines erfindungsgemäßen Bohrspüladditivs auf Basis eines Polymergemisches ist in Beispiel 1 beschrieben.

In Beispiel 2 ist die gute Verträglichkeit des Bohrspüladditivs nach Beispiel 1 gegenüber Elektrolytzusatz im Vergleich zu reiner CMC dargestellt, wie es aus dem Stand der Technik bekannt ist.

In Beispiel 3 und den Vergleichsbeispielen 1 und 2 werden typische Borspülungen mit dem erfindungsgemäßen Bohrspüladditiv auf Basis eines Polymergemisches, einer herkömmlichen CMC und einem in nicht erfindungsgemäßer Weise hergestellten Polymerengemisch in ihren rheologischen Daten sowie den Preßwasserverlusten verglichen.

Die Messungen wurden mit einem Fann-Viskosimeter bzw. mit einer API-Filterpresse, wie in der "API Standard Procedure for Testing Drilling Fluids, RP 13B" beschrieben, vorgenommen.

Bei Verwendung von CMC sieht man deutlich den sehr starken Abfall der Viskosität, der Fließgrenze und der Gelstärke nach 20 h bei 175 °C im sogenannten Roller-Ofen, während sich die Abnahme bei dem erfindungsgemäßen Bohrspüladditiv auf Basis eines Polymergemisches in ökonomisch gut erträglichen Grenzen hält. Auch der Preßwasserverlust ist mehr als doppelt so hoch bei Einsatz von reiner CMC, verglichen mit dem erfindungsgemäßen Bohrspüladditiv.

Neben dem in einer Bohrspülung verwendeten Elektrolyt ist aber bei Bohrungen in schwierigen Formationen auch mit weiteren Laugenzuflüssen zu rechnen. Dem Fachmann ist bekannt, daß Magnesiumsalzzuflüsse die Bohrspülung besonders negativ beeinflussen. Im Beispiel 4 wurde daher eine Bohrspülung mit dem erfindungsgemäßen Bohrspüladditiv auf Basis eines Polymergemisches in einer Mg-Mischlauge hergestellt. Auch hierbei zeigt sich die hervorragende Elektrolytbeständigkeit.

Die erfindungsgemäßen Bohrspüladditive auf Basis eines Polymergemisches werden im allgemeinen der Bohrspülung oder anderen Bohrlochbehandlungsflüssigkeiten in Konzentrationen von 0,5 - 5 Gew.-% zugesetzt. Außer den in den Beispielen verwendeten zusätzlichen Bohrspüladditiven können selbstverständlich auch andere eingesetzt werden. So können zur Dichteerhöhung anstatt Baryt auch Kreide, Eisenoxide oder andere Beschwerungsmaterialien verwendet werden. Anstatt NaCl als Elektrolyt können je nach geologischer Erfordernis auch andere Salze, wie z. B. KCl oder andere aus dem Stand der Technik bekannte eingesetzt werden. Auch andere Additive können in Kombination mit dem Polymergemisch verwendet werden. Die Verwendung des erfindungsgemäßen Bohrspüladditivs auf Basis eines Polymergemisches ist außer in Bohrspülungen auch in anderen Bohrlochbehandlungsflüssigkeiten möglich, bei denen hohe Temperaturstabilität und Elektrolytbeständigkeit erforderlich sind, so z. B. in Workover- und Packer-Flüssigkeiten, oder beim Einzementieren von Futterrohren.

Die Erfindung wird im folgenden durch Ausführungsbeispiele erläutert.

Beispiel 1

10 kg einer noch feuchten, aus Rohbaumwollinters im Slurry-verfahren hergestellten technischen CMC mit einem Aktivgehalt von 65 %, einem DS von 1,30 und einer Viskosität, gemessen nach Brookfield RVT in 5 %iger Lösung, von 20.000 mPa.s, wurden mit 10 kg einer Na-Polyacrylatlösung (MG 2.500) im Kneter 1h intensiv durchmischt, dabei getrocknet und anschließend gemahlen.

Das erfindungsgemäße Polymergemisch zeigte in 5 %iger wäßriger Lösung eine Viskosität von 7.000 mPa.s nach Brookfield RVT.

Beispiel 2

Das erfindungsgemäße Polymergemisch nach Beispiel 1 wurde mit einer CMC in bezug auf Viskositätsverhalten in verschiedenen wäßrigen Salzlösungen verglichen. Die Viskositätsmessungen wurden nach Brookfield RVT vorgenommen.

| Polymer | Salzlösung | Restviskosität in % zum Ausgangswert in Wasser |
|---|---|---|
| 5 % CMC | gesättigte NaCl | 25 |
| 5 % Polymergemisch | gesättigte NaCl | 35 |
| 5 % CMC | gesättigte KCl | 1 |
| 5 % Polymergemisch | gesättigte KCl | 9 |
| 5 % CMC | 15 % CaCl$_2$ | 0,1 |
| 5 % Polymergemisch | 15 % CaCl$_2$ | 0,3 |

Beispiel 3

Es wurde eine wäßrige NaCl-Spülung mit Zusatz des erfindungsgemäßen Bohrspüladditivs auf Basis eines Polymergemisches in der dem Fachmann bekannten Weise bereitet.

| Spülungsrezeptur: | |
|---|---|
| 350 ml | wäßrige NaCl-Lösung, gesättigt |
| 10 g | Attapulgit (Ton) |
| 12,5 g | Polymergemisch nach Beispiel 1 |
| 6 ml | Diethanolamin |
| 200 g | Baryt (Bariumsulfat) |

Für diese Spülung wurden bei Raumtemperatur die folgenden Daten gemessen (Fann-Viskosimeter):

| 600 Upm | 116 Skalenteile |
|---|---|
| 300 Upm | 78 Skalenteile |
| Scheinbare Viskosität | 58 mPa.s |
| Plastische Viskosität | 38 mPa.s |
| Fließgrenze | 19,1 Pa |
| 10 sec Gelstärke | 1,4 Pa |
| 10 min Gelstärke | 5,7 Pa |

Nach der Alterung bei 175 °C über 20 h im Roller-Ofen wurden folgende Werte bestimmt:

| 600 Upm | 80 Skalenteile |
|---|---|
| 300 Upm | 46 Skalenteile |
| Scheinbare Viskosität | 40 mPa.s |
| Plastische Viskosität | 34 mPa.s |
| Fließgrenze | 5,7 Pa |
| 10 sec Gelstärke | 1,0 Pa |
| 10 min Gelstärke | 1,9 Pa |

Mit der API-Filterpresse wurde ein Preßwasserverlust von 4,1 ml bestimmt.

Vergleichsbeispiel 1

Eine analoge Spülung wie in Beispiel 3 wurde mit einer technischen CMC (Viskosität nach Brookfield RVT in 5 %ige Lösung 20.000 mPa.s) bereitet und entsprechend vermessen.

| Spülungsrezeptur: | |
|---|---|
| 350 ml | wäßrige NaCl-Lösung, gesättigt |
| 10 g | Attapulgit (Ton) |
| 12,5 g | CMC |
| 6 ml | Diethanolamin |
| 200 g | Baryt (Bariumsulfat) |

| Rheologische Werte vor der Alterung (Fann-Viskosimeter): | |
|---|---|
| 600 Upm | 286 Skalenteile |
| 300 Upm | 192 Skalenteile |
| Scheinbare Viskosität | 143 mPa.s |
| Plastische Viskosität | 94 mPa.s |
| Fließgrenze | 14,3 Pa |
| 10 sec Gelstärke | 14,4 Pa |
| 10 min Gelstärke | 44,0 Pa |

| Gemessene Werte nach der Alterung bei 175 °C über 20 h im Roller-Ofen: | |
|---|---|
| 600 Upm | 55 Skalenteile |
| 300 Upm | 29 Skalenteile |
| Scheinbare Viskosität | 27,5 mPa.s |
| Plastische Viskosität | 26 mPa.s |
| Fließgrenze | 1,4 Pa |
| 10 sec Gelstärke | 0 Pa |
| 10 min Gelstärke | 1,0 Pa |

Mit der API-Filterpresse wurde ein Preßwasserverlust von 8,8 ml bestimmt.

Damit hat sich gezeigt, daß bei der verwendeten CMC die anfangs recht hohen Werte für Viskosität, Fließgrenze und Gelstärke gegenüber dem erfindungsgemäßen Bohrspüladditiv auf Basis eines Polymergemisches nach einer Temperaturbelastung stark herabgesetzt werden, und auch der Preßwasserverlust mehr als doppelt so hoch ist.

Vergleichsbeispiel 2

Eine analoge Spülung wie in Beispiel 3 wurde mit einem nicht erfindungsgemäßen Polymerengemisch bereitet und entsprechend vermessen. Dieses nicht erfindungsgemäße Polymerengemisch entsprach rein quantitativ dem erfindungsgemäßen nach Beispiel 1, wurde jedoch in nicht erfindungsgemäßer Weise durch Vermischen der Acrylatlösung mit getrockneter CMC hergestellt.

| Spülungsrezeptur: | |
|---|---|
| 350 ml | wäßrige NaCl-Lösung, gesättigt |
| 10 g | Attapulgit (Ton) |
| 12,5 g | Gemisch aus CMC + Polyacrylat 1 : 1 |
| 6 ml | Diethanolamin |
| 200 g | Baryt (Bariumsulfat) |

| Rheologische Werte vor der Alterung (Fann-Viskosimeter): | |
|---|---|
| 600 Upm | 104 Skalenteile |
| 300 Upm | 67 Skalenteile |
| Scheinbare Viskosität | 52 mPa.s |
| Plastische Viskosität | 37 mPa.s |
| Fließgrenze | 14,3 Pa |
| 10″ Gelstärke | 1,9 Pa |
| 10′ Gelstärke | 5,3 Pa |

EP 0 362 121 A2

| Gemessene Werte nach der Alterung bei 175 °C über 20 h im Roller-Ofen: | |
|---|---|
| 600 Upm | 68 Skalenteile |
| 300 Upm | 37 Skalenteile |
| Scheinbare Viskosität | 34 mPa.s |
| Plastische Viskosität | 31 mPa.s |
| Fließgrenze | 2,9 Pa |
| 10″ Gelstärke | 0,5 Pa |
| 10′ Gelstärke | 1,0 Pa |

Mit der API-Filterpresse wurde ein Preßwasserverlust von 6,9 ml bestimmt.

Aus den vorstehenden Werten sind die wesentlich besseren anwendungstechnischen Eigenschaften des erfindungsgemäßen Bohrspüladditivs - im Vergleich zu dem in nicht erfindungsgemäßer Weise hergestellten Polymerengemisch - klar ersichtlich.

Beispiel 4

Zur Demonstration des Einflusses von Magnesium-Mischlauge auf die Spülungseigenschaften wurde eine entsprechende Spülung angesetzt.

## Spülungsrezeptur:

350 ml Magnesium-Mischlauge

Zusammensetzung der Mg-Mischlauge:
- 634 g $MgCl_2$ x $6H_2O$
- 128 g KCl
- 85 g $MgSO_4$ x $H_2O$
- 120 g NaCl
- 1 l dest. $H_2O$

- 10 g Attapulgit
- 12,5 g Polymergemisch gemäß Beispiel 1
- 6 ml Diethanolamin
- 200 g Baryt

Vor und nach Alterung bei 175 °C über 20 h im Roller-Ofen wurden die folgenden Werte mit Fann-Viskosimeter bzw. API-Filterpresse bestimmt.

7

|  | vor Alterung | nach 20 h bei 175 °C |
|---|---|---|
| 600 Upm | 48 Skalenteile | 28 Skalenteile |
| 300 Upm | 27 Skalenteile | 15 Skalenteile |
| Scheinbare Viskosität | 24 mPa.s | 14 mPa.s |
| Plastische Viskosität | 21 mPa.s | 13 mPa.s |
| Fließgrenze | 2,9 Pa | 1,0 Pa |
| 10 sec Gelstärke | 1,4 Pa | 1,0 Pa |
| 10 min Gelstärke | 3,8 Pa | 1,9 Pa |
| Preßwasserverlust | 21 ml | 29 ml |

**Ansprüche**

1. Bohrspüladditive auf Basis eines Polymergemisches aus 20 bis 80 Gew.-% Carboxymethylcellulose und 80 bis 20 Gew.-% einer Polycarbonsäure, ausgewählt aus Polyacrylat, Polymethacrylat und/oder deren Copolymerisaten, und/oder deren Salzen, dadurch gekennzeichnet, daß die Carboxymethylcellulose, die nach dem Slurry-Verfahren aus Rohlinters und/oder Holzcellulose erhalten worden ist, im nassen alkoholfeuchten Zustand mit der Polycarbonsäure vermischt und getrocknet wird, wobei technische oder gereinigte Carboxymethylcellulose verwendet wird.

2. Additive nach Anspruch 1, dadurch gekennzeichnet, daß sie aus 30 bis 70 Gew.-%, vorzugsweise 40 bis 60 Gew.-% Carboxymethylcellulose und 70 bis 30 Gew.-%, vorzugsweise 60 bis 40 Gew.-%, einer Polycarbonsäure und/oder deren Salzen bestehen.

3. Additive nach Ansprüchen 1 und 2, dadurch gekennzeichnet, daß die Carboxymethylcellulose eine Viskosität, gemessen nach Brookfield RVT in 5 %iger Konzentration, von 5.000 bis 25.000 mPa.s, vorzugsweise 10.000 bis 20.000 mPa.s, aufweist.

4. Additive nach Ansprüchen 1 bis 3, dadurch gekennzeichnet, daß die Carboxymethylcellulose einen durchschnittlichen Substitutionsgrad von 0,9 bis 1,5, vorzugsweise von 1,0 bis 1,32, aufweist.

5. Additive nach Anspruch 1, dadurch gekennzeichnet, daß die Polycarbonsäuren und/oder deren Salze ein Molekulargewicht von 1.000 bis 3.000 aufweisen.

6. Verfahren zur Herstellung der Bohrspüladditive nach Ansprüchen 1 bis 5, dadurch gekennzeichnet, daß man 20 bis 80 Gew.-% aus Rohlinters und/oder Holzcellulose nach dem Slurry-Verfahren gewonnene Carboxymethylcellulose im nassen alkoholfeuchten Zustand mit 80 bis 20 Gew.-% einer Polycarbonsäure, ausgewählt aus Polyacrylat, Polymethacrylat und/oder deren Copolymerisaten und/oder deren Salzen, vermischt und trocknet, wobei technische und/oder gereinigte Carboxymethylcellulose verwendet wird.

7. Verwendung von Bohrspüladditiven auf Basis eines Polymergemisches nach Ansprüchen 1 bis 6, in Bohrspülungen und anderen Bohrlochbehandlungsflüssigkeiten oder beim Einzementieren von Futterrohren, insbesondere in Konzentrationen von 0,5 bis 5 Gew.-%.